# EUROPEAN PATENT SPECIFICATION

(11) **EP 1 443 003 B1**
(45) Date of publication and mention of the grant of the patent: **19.04.2006**
(21) Application number: 04075203.2
(22) Date of filing: 28.01.2004
(51) Int. Cl.: B65G 25/06

(54) **Drive device**
Antriebsvorrichtung
Dispositif d'entraînement

(30) Priority: 31.01.2003 NL 1022541
(43) Date of publication of application: 04.08.2004
(73) Proprietor: Hyva International B.V., 2400 AH Alphen aan de Rijn (NL)
(72) Inventor: Biemond, Jacob, 2411 JZ Bodegraven (NL)
(74) Representative: Uittenbogaart, Gustaaf Adolf

(56) References cited:
- US-A- 4 793 469
- US-A- 5 301 798
- US-A- 5 355 995

## Description

The invention relates to a drive device in accordance with the preamble of Claim 1. Drive devices of this type are known, inter alia from EP A 0721901. In this known device, the hydraulic drives for three groups of floorboards are assembled together in a frame which can be mounted in a lorry between the longitudinal beams. The drawback of the known device is that the frame has to be sufficiently strong and consequently has to be of considerable weight, which is at the expense of the loading capacity of the lorry. To avoid this drawback, the drive device is designed in accordance with the characterizing clause of Claim 1. This makes it possible for the drive device to be designed without a frame and therefore with a reduced weight. In accordance with a refinement, the drive device is designed in accordance with Claim 2. As a result, the hydraulic drive is placed directly beneath the coupling bar, with the result that the load on the various components is minimized.

In accordance with a refinement, the drive device is designed in accordance with Claim 3. This allows the distance between the cross-beams to be minimized, so that the sagging of the floorboards is also minimized.

In accordance with a refinement, the drive device is designed as described in Claim 4. This provides a simple and compact structure.

In accordance with a refinement, the drive device is designed as described in Claim 5. This means that the coupling bar is driven at two locations, so that the coupling bar and the hydraulic drive can be of more lightweight design.

In accordance with a refinement, the drive device is designed as described in Claim 6. This reduces the load on the coupling bar and means that the latter can be of more lightweight design.

In accordance with a refinement, the drive device is designed as described in Claim 7. This leads to the forces on the coupling bar being partially absorbed by the rectilinear guide and the seals of the hydraulic device not being subject to load from lateral forces, which extends their service life.

In accordance with a further refinement, the drive device is designed as described in Claim 8. As a result, at the drive device it is possible to increase the distance between the cross-beams and to lengthen the stroke of the hydraulic drive.

In accordance with a refinement, the drive device is designed as described in Claim 9. As a result, in the second setting in each case only a limited number of floorboards are moved, with the result that the cargo remains stationary, whereas in the first setting the cargo is moved.

In accordance with a further refinement, the drive is designed as described in Claim 10. This makes it possible to make do with two groups of floorboards and two coupling bars, so that the costs and weight of the device are limited.

The invention is explained below on the basis of a number of exemplary embodiments and with reference to a drawing, in which:
Figure 1 shows a diagrammatic, perspective view of a tractor unit with a semitrailer,
Figure 2 shows a diagrammatic cross section through the floor of the semitrailer,
Figure 3 shows diagrammatic cross sections through three embodiments of the floor of the semitrailer with a hydraulic drive device for floorboards,
Figure 4 shows a diagrammatic plan view of the floor of the semitrailer shown in Figure 3b without the floorboards,
Figure 5 shows a diagrammatic side view of a first embodiment of a hydraulic drive, and
Figure 6 shows a diagrammatic side view of a second embodiment of a hydraulic drive.

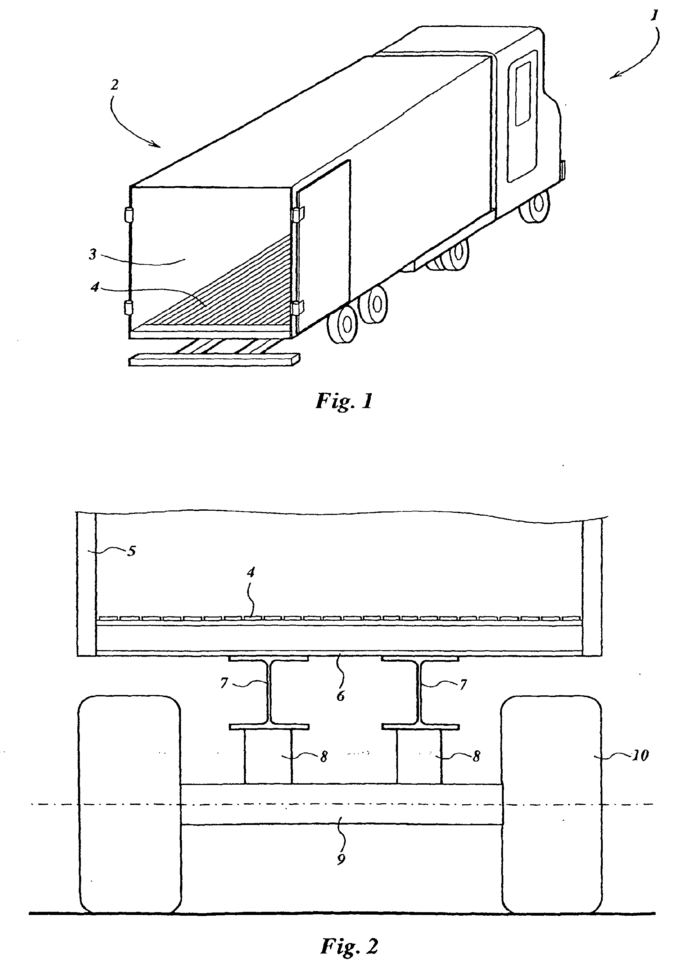

Figure 1 shows a semitrailer 2 which is pulled by a tractor unit 1. The semitrailer 2 has a loading space 3 with a loading floor which comprises floorboards 4. Figure 2 shows how the structure of the semitrailer 2 is constructed. The floorboards 4 rest on cross-beams 6 and can move to and fro over them in the longitudinal direction. As a result of one group of floorboards 4 being moved in one direction and a second group of floorboards 4 being kept stationary, cargo which is present in the loading space 3 will not move. If all the floorboards 4 are simultaneously moved in the same direction, the cargo in the loading space 3 will move and the semitrailer 2 can be loaded or unloaded. Both cargo which is on pallets or in boxes and also loose bulk cargo, such as wood pulp, can be loaded into and unloaded from the loading space 3 in this way. In the case of wood pulp, there will be features preventing wood pulp from being able to penetrate between the floorboards 4.

Figure 2 diagrammatically depicts the structure of the semitrailer 2. The floorboards 4 rest on cross-beams 6 which are fixed at regular intervals, for example at a distance of 0.4 meter from one another, to two longitudinal beams 7, for example by welding. The longitudinal beams 7 are supported in a known way, for example at the location of wheels 10 by an axle 9, in which case a spring 8 is positioned between the axle 9 and the longitudinal beam 7. At the location of the tractor unit 1, the longitudinal beams 7 are supported in a known way by the tractor unit 1, for example with the aid of a pivoting coupling (not shown). Side walls 5 are secured to the cross-beams 6. Figure 2 diagrammatically depicts the floorboards 4. It is known to the person skilled in the art that the floorboards 4 are guided over the cross-beams 6 using guides (not shown) and that there are features which prevent the possibility of the floorboards 4 being lifted up.

One example of the guide (not shown) is a profiled section or box section which is arranged over the length of the floorboards 4 beneath each floorboard 4. In addition to its guiding function, this profiled section also serves to support the floorboard 4 and reduce the sagging of the floorboard.

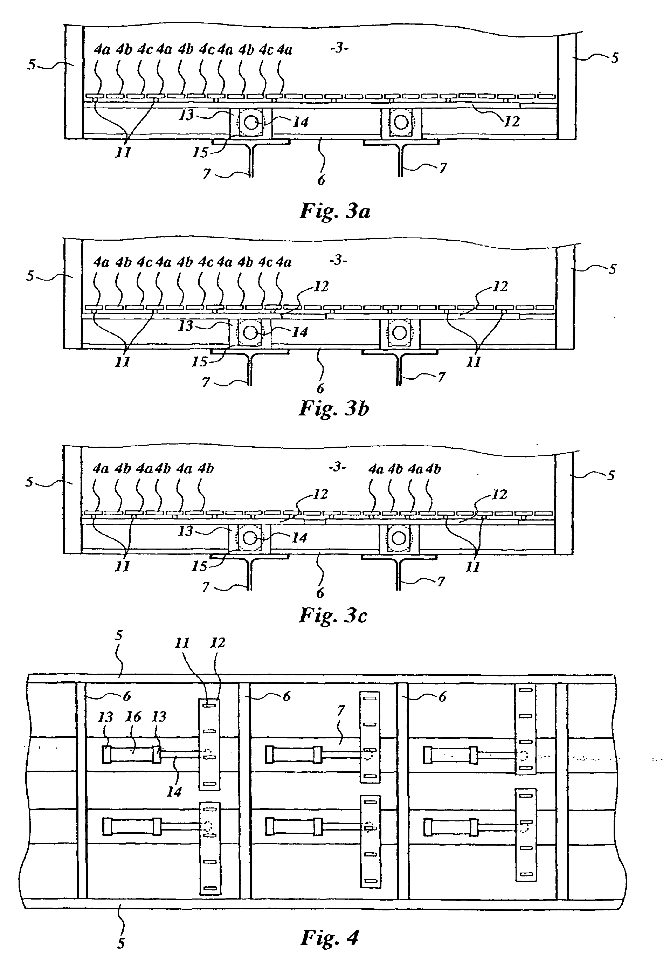

The floorboards 4 can move to and fro with a stroke of, for example, 0.2 meter, the groups of floorboards 4 are coupled to one another and can move simultaneously. The floorboards 4 are moved by a hydraulic drive as shown in Figures 3, 4 and 5. The hydraulic drive comprises a cylinder 16 with, at the ends, cylinder covers 13 which are screwed to the longitudinal beam 7 in a known way. A piston (not shown) can move inside the cylinder 16 under the influence of hydraulic fluid pressure. Secured to the piston is a piston rod 14 which projects through one of the cylinder covers 13 and is secured, by means of a securing piece 15, to a coupling bar 12 which runs more or less parallel to the cross-beams 6 and can move to and fro in the longitudinal direction of the semitrailer 2 with the stroke of, for example, 0.2 meter. The floorboards 4A, 4B or 4C which belong to the same group are secured to the coupling bar 12 by coupling pieces 11.

Figure 3 shows various exemplary embodiments of various ways of driving the floorboards 4.

In Figure 3a, there are three groups of floorboards 4A, 4B and 4C. Each group of floorboards 4A, 4B or 4C is coupled to one coupling bar 12, and the coupling bar 12 is driven by two piston rods 14 which form part of two hydraulic drives which are mounted above the two longitudinal beams 7. These hydraulic drives, which are positioned next to one another, are in each case activated simultaneously. When the cargo is to be moved, the three coupling bars 12, one for each group 4A, 4B and 4C, are driven simultaneously by a total of six hydraulic drives. To return to the starting position for movement, the coupling bars 12 are driven successively. Figure 3b shows another embodiment of the device. Figure 4 shows a plan view of this embodiment without the floorboards 4. In this embodiment, there is a separate coupling bar 12 for each hydraulic drive mounted on a longitudinal beam 7, the active length of the separate coupling bars 12 being less than half the width of the loading floor, allowing half the floorboards 4 of a group to be moved. This means that in the event of an uneven load on the loading floor, the bearing moment acting on the coupling bar 12 is reduced, so that the coupling bar 12 can be of more lightweight design. On account of the fact that there are always two hydraulic drives mounted next to one another on the two longitudinal beams 7, the floorboards of the entire group. 4A or 4B or 4C are nevertheless driven simultaneously. In this case, it is possible to opt to actuate the hydraulic drives so as to switch on the hydraulic drives positioned next to one another simultaneously. In this case, the floorboards 4 are moved in three groups. Another option may be for the adjacent hydraulic drives to be switched on successively in one of the two directions of movement, so that group 4A or 4B or 4C is then split into two groups and the floorboards 4 are moved in a total of six groups.

Figure 3c shows another embodiment. In this case, the movable floorboards 4 are divided into two groups 4A and 4B, each group being coupled to two coupling bars 12, each having an active length of less than half the width of the loading floor. In this embodiment too, the two hydraulic drives which are positioned next to one another on the longitudinal beams 7 can be activated simultaneously, in which case the floorboards 4 are moved in two groups or altogether. It is also possible, as described above in connection with Figure 3b, for these hydraulic drives to be activated in succession, in which case the floorboards 4 are moved in four groups or all at once. In this embodiment, only four hydraulic drives are required. This embodiment will be used primarily in situations in which the cargo consists of loose bulk material which is also supported against the side wall 5 or against adjacent parts of the cargo and is therefore subject to resistance against movement.

To increase the resistance, it is also possible for stationary floorboards to be arranged on the cross-beams 6 between the movable floorboards 4. If a stationary board is arranged between all the movable floorboards 4 which are moved in two groups, this stationary board may have a width of half the movable board.

In the embodiments shown above, the hydraulic drive is positioned on the top side of the longitudinal beams 7. It will be clear to the person skilled in the art that the hydraulic drive may also be mounted on the side of the longitudinal beams, for example in the situation where the longitudinal beams 7 are designed as U-sections with the base of the U-section running vertically.

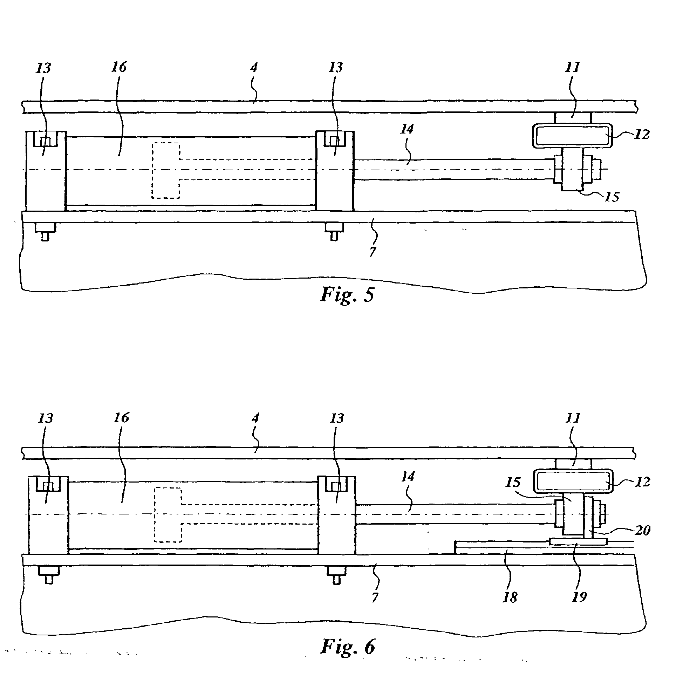

Figure 6 shows an embodiment in which the coupling bar 12 is coupled to a rectilinear guide, so that in the event of an uneven load on the loading floor no lateral forces are exerted on the piston rod 14 and consequently the seal in the cylinder cover 13 and the piston rod 14 is not subject to lateral loads. For this purpose, a guide rail 18, over which a carriage 19 can move to and fro, is positioned on the longitudinal beam 7. A securing plate 20 which is coupled to the piston rod 14 and the coupling bar 12 is secured to the carriage 19. As a result of the coupling bar 12 being supported by the carriage 19, the carriage also has a bearing function and in this case the distance between the cross-beams 6 can be increased while the sagging of the floorboards 4 remains unchanged. It will be clear to the person skilled in the art that in this situation it is also possible for the floorboards 4 which are not attached to the coupling bar 12 by a coupling piece 11 to be supported on the coupling bar 12. In addition to the embodiment as a rectilinear guide which is shown, it is also possible, for example, for the piston rod 14 to be moved through a bearing sleeve, which bearing sleeve is attached to the longitudinal beam 7.

In the exemplary embodiment discussed above, the drive device is shown for use in a semitrailer. The drive device can also be used in trucks or trailers without modifications being required.

## Claims

1. Drive device for moving floorboards (4) of a loading floor in a loading space (3) of a vehicle in groups, it being possible for each group of floorboards or all the floorboards to be moved simultaneously to and fro over a limited distance in the longitudinal direction of the loading space, the floorboards lying next to one another in the width direction of the loading space, on cross-beams (6), and the cross-beams being secured to at least two longitudinal beams (7), which drive device comprises at least two coupling bars (12) for coupling floorboards which are to be moved together, it being possible for each coupling bar to move above the longitudinal beams and between two cross-beams, and a hydraulic drive for moving a coupling bar to and fro in the longitudinal direction **characterized in that** the hydraulic drive is secured directly to a longitudinal beam (7) and to a coupling bar (12)

2. Drive device according to Claim 1, in which the hydraulic drive is arranged on the top side of the longitudinal beam (7).

3. Drive device according to Claim 1 or 2, in which between each pair of cross-beams (6) one hydraulic drive is secured to each longitudinal beam (7).

4. Drive device according to one of the preceding claims, in which the hydraulic drive comprises a cylinder (16) and a piston with piston rod (14), and the cylinder is secured to the longitudinal beam (7) and the piston rod (14) is secured to the coupling bar (12).

5. Drive device according to one of the preceding claims, in which a coupling bar (12) is coupled to two hydraulic drives which are secured to the longitudinal beams (7) adjacent to one another.

6. Drive device according to one of the preceding claims, in which a coupling bar (12) has an active length which is shorter than half the width of the loading floor.

7. Drive device according to one of the preceding claims, in which a rectilinear guide (18, 19) is secured to the longitudinal beam (7) for guiding the coupling bar (12) or the movable part (14), which is coupled to the coupling bar, of the hydraulic device.

8. Drive device according to Claim 7, in which the rectilinear guide (18, 19) and the coupling bar (12) are designed in such a manner that they support the floorboards (4) located above them.

9. Drive device according to one of the preceding claims, in which there is a switching device for automatically actuating the hydraulic drives, and the switching device is designed in such a manner that in a first setting the hydraulic drives move the coupling bars in the same direction and in a second setting the hydraulic drives move the coupling bars towards one another.

10. Drive device according to one of the preceding claims, in which there is a switching device for automatically actuating the hydraulic drives, which switching device is designed in such a manner that in a first setting the hydraulic drives move the coupling bars in the same direction and in a second setting the hydraulic drives move the coupling bars in such a manner that half of the total number of movable floorboards move simultaneously.

## Patentansprüche

1. Antriebsvorrichtung zum Bewegen von Fußbodendielen (4) eines Ladebodens in einem Laderaum (3) eines Fahrzeugs in Gruppen, wobei es für jede Gruppe von Fußbodendielen oder alle Fußbodendielen möglich ist, simultan über eine beschränkte Distanz in der Längsrichtung des Laderaums hin und her bewegt zu werden, wobei die Fußbodendielen in der Breitenrichtung des Laderaums auf Querbalken (6) nebeneinander liegen, und die Querbalken an mindestens zwei Längsbalken (7) befestigt sind, wobei die Antriebsvorrichtung mindestens zwei Kupplungsstangen (12) zum Kuppeln von Fußbodendielen, die gemeinsam zu bewegen sind, wobei es für jede Kupplungsstange möglich ist, sich über die Längsbalken und zwischen zwei Querbalken zu bewegen, und einen hydraulischen Antrieb zum Hin- und Herbewegen einer Kupplungsstange in der Längsrichtung umfasst, **dadurch gekennzeichnet, dass** der hydraulische Antrieb direkt an einem Längsbalken (7) und an einer Kupplungsstange (12) befestigt ist.

2. Antriebsvorrichtung nach Anspruch 1, in der der hydraulische Antrieb auf der Oberseite des Längsbalkens (7) angeordnet ist.

3. Antriebsvorrichtung nach Anspruch 1 oder 2, in der zwischen jedem Paar von Querbalken (6) ein hydraulischer Antrieb an jedem Längsbalken (7) befestigt ist.

4. Antriebsvorrichtung nach einem der vorhergehenden Ansprüche, in der der hydraulische Antrieb einen Zylinder (16) und einen Kolben mit Kolbenstange (14) umfasst und der Zylinder am Längsbalken (7) befestigt ist und die Kolbenstange (14) an der Kupplungsstange (12) befestigt ist.

5. Antriebsvorrichtung nach einem der vorhergehenden Ansprüche, in der eine Kupplungsstange (12) an zwei hydraulische Antriebe gekuppelt ist, die aneinander benachbart an den Längsbalken (7) befestigt sind.

6. Antriebsvorrichtung nach einem der vorhergehenden Ansprüche, in der eine Kupplungsstange (12) eine aktive Länge hat, die kürzer als die Hälfte der Breite des Ladebodens ist.

7. Antriebsvorrichtung nach einem der vorhergehenden Ansprüche, in der eine geradlinige Führung (18, 19) am Längsbalken (7) befestigt ist, um die Kupplungsstange (12) oder den beweglichen Teil (14) der hydraulischen Vorrichtung, der an die Kupplungsstange gekuppelt ist, zu führen.

8. Antriebsvorrichtung nach Anspruch 7, in der die geradlinige Führung (18, 19) und die Kupplungsstange (12) derart konstruiert sind, dass sie die Fußbodendielen (4), die über ihnen angeordnet sind, tragen.

9. Antriebsvorrichtung nach einem der vorhergehenden Ansprüche, in der eine Schaltvorrichtung zum automatischen Betätigen der hydraulischen Antriebe vorhanden ist, und die Schaltvorrichtung derart konstruiert ist, dass die hydraulischen Antriebe in einer ersten Einstellung die Kupplungsstangen in die gleiche Richtung bewegen und die hydraulischen Antriebe die Kupplungsstangen in einer zweiten Einstellung aufeinander zu bewegen.

10. Antriebsvorrichtung nach einem der vorhergehenden Ansprüche, in der eine Schaltvorrichtung zum automatischen Betätigen der hydraulischen Antriebe vorhanden ist, wobei die Schaltvorrichtung derart konstruiert ist, dass die hydraulischen Antriebe in einer ersten Einstellung die Kupplungsstangen in die gleiche Richtung bewegen und die hydraulischen Antriebe die Kupplungsstangen in einer zweiten Einstellung derart bewegen, dass sich die Hälfte der Gesamtanzahl von beweglichen Fußbodendielen simultan bewegt.

## Revendications

1. Dispositif d'entraînement pour la manutention par groupes de planchers (4) d'un plan de chargement dans un espace de chargement (3) d'un véhicule, chaque groupe de planchers ou tous les groupes de planchers pouvant être déplacés simultanément en va-et-vient sur une distance limitée dans la direction longitudinale de l'espace de chargement, les planchers se situant côte à côte dans le sens de la largeur de l'espace de chargement, sur des poutres transversales (6), et les poutres transversales étant fixées sur au moins deux poutres longitudinales (7), lequel dispositif d'entraînement comprend au moins deux barres d'accouplement (12) pour réunir des planchers qui doivent être déplacés ensemble, chaque barre d'accouplement pouvant se déplacer au-dessus des poutres longitudinales et entre deux poutres transversales, et un entraînement hydraulique pour déplacer une barre d'accouplement en va-et-vient dans la direction longitudinale,
**caractérisé en ce que** l'entraînement hydraulique est fixé directement sur une poutre longitudinale (7) et sur une barre d'accouplement (12).

2. Dispositif d'entraînement selon la revendication 1, dans lequel l'entraînement hydraulique est disposé sur le côté supérieur de la poutre longitudinale (7).

3. Dispositif d'entraînement selon la revendication 1 ou 2, dans lequel entre chaque paire de poutres transversales (6) un entraînement hydraulique est fixé sur chaque poutre longitudinale (7).

4. Dispositif d'entraînement selon l'une des revendications précédentes, dans lequel l'entraînement hydraulique comprend un cylindre (16) et un piston avec une tige de piston (14), et le cylindre est fixé sur la poutre longitudinale (7) et la tige de piston (14) est fixée sur la barre d'accouplement (12).

5. Dispositif d'entraînement selon l'une des revendications précédentes, dans lequel une barre d'accouplement (12) est reliée à deux entraînements hydrauliques qui sont fixés sur les poutres longitudinales (7) contiguës entre elles.

6. Dispositif d'entraînement selon l'une des revendications précédentes, dans lequel une barre d'accouplement (12) a une longueur active qui est plus courte que la moitié de la largeur du plan de chargement.

7. Dispositif d'entraînement selon l'une des revendications précédentes, dans lequel un guidage rectiligne (18,19) est fixé sur la poutre longitudinale (7) pour guider la barre d'accouplement (12) ou la partie mobile (14), qui est reliée à la barre d'accouplement, du dispositif hydraulique.

8. Dispositif d'entraînement selon la revendication 7, dans lequel le guidage rectiligne (18,19) et la barre d'accouplement (12) sont conçus de manière à supporter les planchers (4) situés au-dessus d'eux.

9. Dispositif d'entraînement selon l'une des revendications précédentes, dans lequel est prévu un dispositif de commutation pour actionner automatiquement les entraînements hydrauliques, et le dispositif de commutation est conçu de telle sorte que dans un premier réglage, les entraînements hydrauliques déplacent les barres d'accouplement dans la même direction et dans un second réglage les entraînements hydrauliques déplacent les barres d'accouplement l'une vers l'autre.

10. Dispositif d'entraînement selon l'une des revendications précédentes, dans lequel est prévu un dispositif de commutation pour actionner automatiquement les entraînements hydrauliques, lequel dispositif de commutation est conçu de telle sorte que dans un premier réglage, les entraînements hydrauliques entraînent les barres d'accouplement dans la même direction et dans un second réglage, les entraînements hydrauliques déplacent les barres d'accouplement de telle sorte que la moitié du nombre total de planchers mobiles se déplace simultanément.
